(19)

Europäisches
Patentamt
European
Patent Office
Office européen
des brevets

(11) **EP 1 819 078 A1**

(12) **EUROPEAN PATENT APPLICATION**
published in accordance with Art. 158(3) EPC

(43) Date of publication:
**15.08.2007 Bulletin 2007/33**

(21) Application number: **05788034.6**

(22) Date of filing: **30.09.2005**

(51) Int Cl.:
***H04J 11/00*** *(2006.01)*

(86) International application number:
**PCT/JP2005/018194**

(87) International publication number:
**WO 2006/038569 (13.04.2006 Gazette 2006/15)**

(84) Designated Contracting States:
**DE FR**

(30) Priority: **01.10.2004 JP 2004290702**

(71) Applicant: **KABUSHIKI KAISHA TOSHIBA**
**Tokyo 105-8001 (JP)**

(72) Inventors:
• **TAKAHASHI, Yasuo**
**Toshiba Corporation**
**Tokyo 105-8001 (JP)**

• **ISHIDA, Toshihiro**
**Toshiba Corporation**
**Tokyo 105-8001 (JP)**

(74) Representative: **Henkel, Feiler & Hänzel**
**Patentanwälte**
**Maximiliansplatz 21**
**80333 München (DE)**

(54) **BROADCAST SIGNAL TIME MEASUREMENT DEVICE, TRANSMISSION DEVICE AND RELAY DEVICE USING THE TIME MEASUREMENT DEVICE, AND DELAY TIME MEASUREMENT DEVICE**

(57)    A time measuring apparatus includes window generation means for delaying the reception signal of one symbol to correlate the guard intervals before and after delaying with each other, generating an OFDM symbol timing signal based on its correlation result and generating a fast Fourier transformation (FFT) window signal necessary to FFT-process the reception signal based on the generated OFDM symbol timing signal, FFT means for FFT-processing the reception signal based on the FFT window signal, time information acquiring means for acquiring reference time information at FFT window signal generation, carrier symbol extraction means for extracting the reference carrier symbol signal from an output of the FFT means, measuring means for measuring a time difference between an OFDM symbol signal with the reference carrier symbol signal extracted at the carrier symbol extraction means belonged thereto and the FFT window signal, and computing means for computing the reception time based on the reference time information acquired at the time information acquiring means and the time difference measured by the measuring means.

FIG. 2

EP 1 819 078 A1

**Description**

Technical Field

The present invention relates to a time measuring apparatus for a broadcast signal, which is used for, for example, a transmitting station or a relay station of terrestrial digital broadcast, and which is for measuring a transmission time or reception time of the terrestrial digital broadcast, and a measuring method therefore, and a transmission apparatus and a relay apparatus using the transmission time measuring apparatus, and a delay time measuring apparatus.

Background Art

The terrestrial digital broadcast standardized in Europe has the feature that a plurality of transmitting stations commonly have the same transmission frequency by utilizing the robustness against multi-pass which is the feature of an OFDM transmitting method, and a wide range of service area can be covered by the plurality of transmitting stations without co-channel interference due to the same transmission frequency being transmitted within a designated timing range.

In this way, a transmission network such that the plurality of transmitting stations carrying out the same broadcasting service transmit the broadcasting service at the same frequency is called single frequency network (SFN), and is a technical factor which characterizes the digital broadcast (for example, Jpn. Pat. Appln. No. 11-373532). In accordance with the SFN technique, it is possible to largely economize frequencies for broadcasting. However, in order to establish the above-described SFN, it is assumed that the plurality of transmitting stations transmit broadcast signals within a predetermined transmission timing error range, and a technique in which the transmission timing of the respective transmitting stations are managed by the entire network is extremely important.

In a case of a terrestrial digital broadcast based on the OFDM transmitting method, there is the feature that a plurality of waves, having the same transmission waveform within a range which is not over a guard interval length, generally do not interfere each other. Accordingly, it is necessary to manage the transmission time such that a reception timing difference of the waves from the plurality of transmitting stations composing the above-described SFN is made to be less than or equal to the aforementioned guard interval length at receiving points in a predetermined service area. In order to prepare the reception timing condition in the wide range of service area, an extremely high accuracy is required for the transmission timing.

However, transmission outputs of the terrestrial digital broadcast have noise-like waves; it is difficult to directly measure the transmission time from the transmission outputs.

Therefore, for managing the transmission timing at the plurality of transmitting stations, the Association of Radio Industry and Business (hereinafter, referred to as ARIB) defines a method for managing the transmission times of the respective transmitting stations by inserting signals indicating OFDM frame synchronous timing into digital signals for broadcast [hereinafter, referred to as broadcast transport stream (TS)] transmitted from studios to the transmitting stations, detecting the inserted signals at the respective transmitting stations and measuring the synchronous timing by using time signals generated by a global positioning system (GPS) receiver, etc., separately prepared. (ARIB STD-B 31 attached document, section 3. 14. 1)

If signal processing delay times at OFDM modulators, etc. provided at each transmitting station have already been known, the above-mentioned method has an advantage that the method can estimate the transmission time of the broadcast TS from the studio by detecting the inserted signals at the respective transmitting stations and adding signal processing delay times to the detection timing. But, if OFDM modulators manufactured by different manufactures are co-existed in the SFN, it is extremely hard to exactly manage the signal processing delay times. The method causes a problem that actual transmission times are deviated from estimated values because the transmission delay times are varied sometimes in the case of modifications of signal lines or the like in the transmitting stations.

In addition, a method for estimating transmitting time by utilizing a technique of a terrestrial digital broadcast receiver is proposed. However, it is difficult for this method to accurately measure the signal processing delay time of a demodulator in the broadcast receiver. Although the broadcast receiver uses correlation computing for symbol synchronous detection, the correlation output tends to be affected by a noise or multi-pass, so that a measurement error occurs frequently.

Moreover, a method in which the transmission time is estimated by determining a delay profile which is computed from pilot signals inserted in the OFDM signal can be considered. But, anything other than a relative delay time difference cannot be obtained from the delay profile, and in order to measure the relative delay time between the transmitters installed at different places, it is necessary to exactly know a propagation delay from the transmitting station to a point of measurement. However, there are a large number of multi-passes in terrestrial, and because a transmission path characteristic varies in accordance with environmental conditions, it is difficult to exactly know the propagation profile from the transmitting station to the point of measurement. In addition, because radio wave serving as a reference is required, it is necessary to consider places where a reference station and a station which is to be measured are located, and complicated work such as a preliminary survey for measurement or the like is required.

As described above, at present, there is no effective means for measuring the transmission time of a terrestrial digital broadcast signal, and it is difficult to structure the SFN in which it is necessary to exactly grasp transmission time of a plurality of transmitting stations, and to carry out management for a network. In particular, when a modification of a transmitting station or the like is carried out, there is the possibility that a signal processing delay time differs in accordance with an apparatus which is used, and it is necessary to verify a state of a service area after the modification. Therefore, there is the problem that complications and administrative costs for the network management increase.

Disclosure of Invention

An object of the present invention is to provide a time measuring apparatus for a broadcast signal capable of measuring a reception time or transmission time of a broadcast signal with high accuracy and an actual operation state by using a simple device; and a transmission apparatus and a relay apparatus using the time measuring apparatus; and a delay time measuring apparatus.

According to an aspect of the present invention, there is provided a time measuring apparatus for receiving a digital broadcast signal in which a reference carrier symbol signal having known amplitude/phase characteristics is repeatedly superimposed on each of a plurality of subcarriers in mutually orthogonal relations at specific frequency intervals and specific orthogonal frequency division multiplex (OFDM) symbol intervals, and also a mode and a length of a guard interval of which are known by an OFDM method to measure a reception time of the reception signal, comprising: window generation means for delaying the reception signal of one symbol to correlate the guard intervals before and after delaying with each other, generating an OFDM symbol timing signal based on its correlation result and generating a fast Fourier transformation (FFT) window signal necessary to FFT-process the reception signal based on the generated OFDM symbol timing signal; FFT means for FFT-processing the reception signal based on the FFT window signal; time information acquiring means for acquiring reference time information at FFT window signal generation; carrier symbol extraction means for extracting the reference carrier symbol signal from an output of the FFT means; measuring means for measuring a time difference between an OFDM symbol signal with the reference carrier symbol signal extracted at the carrier symbol extraction means belonged thereto and the FFT window signal; and computing means for computing the reception time based on the reference time information acquired at the time information acquiring means and the time difference measured by the measuring means.

According to another aspect of the present invention, there is provided a transmission apparatus used as a transmitting station in a transmission system for transmitting a transmission signal from a studio to be a transmission side to a transmission path and receiving the transmission signal from the transmission path at a transmitting station to be a reception side to modulation-output at an OFDM modulator, comprising: the time measuring apparatus according to claim 1; a delayer which is disposed at a front stage of the OFDM modulator and delays an input signal to the OFDM modulator by an arbitrary amount; and delay control means for controlling the delay amount of the delayer based on a measurement result from the time measuring apparatus.

According to yet another aspect of the present invention, there is provided a transmission apparatus used as a transmitting station in a transmission system for transmitting a transmission signal from a studio to be a transmission side to a transmission path and receiving the transmission signal from the transmission path at a transmitting station to be a reception side to modulation-output at an OFDM modulator, comprising: the time measuring apparatus according to claim 1; a delayer which is disposed at a rear stage of the OFDM modulator and delays an output signal from the OFDM modulator by an arbitrary amount; and delay control means for controlling the delay amount at the delayer based on a measurement result from the time measuring apparatus.

According to yet another aspect of the present invention, there is provided a relay apparatus used as a relay station in a transmission system for modulating a transmission signal to transmit it at an OFDM modulator on a transmission side and receiving an OFDM modulated signal from the transmission path at the relay station to be a reception side to re-transmit it, comprising: the time measuring apparatus according to claim 1; a delayer for delaying the OFDM modulated signal by an arbitrary amount; and delay control means for controlling the delay amount at the delayer based on a measurement result from the time measuring apparatus.

According to yet another aspect of the present invention, there is provided a relay apparatus used for a transmission system for transmitting a transmission signal to a transmission path from a transmission side, receiving a transmission signal from the transmission path at a relay station to be a reception side, and modulating it at an OFDM modulator to re-transmit it, comprising: the time measuring apparatus according to claim 1; a delayer which is disposed at a rear stage of the OFDM modulator and delays an output signal from the OFDM modulator by an arbitrary amount; and delay control means for controlling the delay amount of the delayer based on a measurement result from the time measuring apparatus.

According to yet another aspect of the present invention, there is provided a delay time measuring apparatus for measuring a delay time of a signal processing system to process a digital broadcast signal by using the time measuring apparatus according to claim 1, comprising: first time measuring means for directly inputting the digital broadcast signal to the time measuring apparatus to measure a transmission time of its input signal; second time measuring means for inputting the digital broadcast signal to the time measuring apparatus via the signal processing system to measure a transmission time of the input signal; and computing means for computing a delay time based on measurement results from the first and the second measuring means.

According to yet another aspect of the present invention, there is provided a delay time measuring apparatus which uses the time measuring apparatus according to claim 1 installed in each transmitting station or relay station in a transmission system for transmitting or relaying/re-transmitting the same digital broadcast signals from a plurality of sites to measure a transmission delay time of the transmission system, comprising: collecting means for collecting transmission time information of the digital broadcast signal measured at each transmitting station or relay station; and computing means for computing a transmission delay time based on a collection result from the collecting means.

According to yet another aspect of the present invention, there is provided a time measuring apparatus for receiving a digital broadcast signal in which a reference carrier symbol signal having known amplitude/phase characteristics is repeatedly superimposed on each of a plurality of subcarriers in mutually orthogonal relations at specific frequency intervals and specific orthogonal frequency division multiplex (OFDM) symbol intervals, a mode and a length of a guard interval of which are known by an OFDM method, and a transmission mode configuration control (TMCC) signal for specifying a frame synchronism is added, to measure a reception time of the reception signal, comprising: window generation means for delaying the reception signal of one symbol to correlate the guard intervals before and after delaying with each other, generating an OFDM symbol timing signal based on its correlation result and generating a fast Fourier transformation (FFT) window signal necessary to FFT-process the reception signal based on the generated OFDM symbol timing signal; FFT means for FFT-processing the reception signal based on the FFT window signal; time information acquiring means for acquiring reference time information at FFT window signal generation; detecting means for detecting a frame synchronization signal from the TMCC signal by extracting the TMCC signal from the output of the FFT means; measuring means for measuring a time difference between the reference time information and the FFT window signal synchronized with the frame synchronization signal; carrier symbol extraction means for extracting the reference carrier symbol signal from an output of the FFT means; delay profile computing means for computing a delay profile from the reference carrier symbol signal extracted from the carrier symbol extracting means; and correcting means for obtaining the reception time by correcting the time difference measured by the measuring means based on the delay profile.

Brief Description of Drawings

FIG. 1 is a block diagram showing a configuration of a time measuring apparatus according to a first embodiment of the present invention;

FIG. 2 is a block diagram showing a detailed configuration of the time measuring apparatus according to the first embodiment of the present invention;

FIG. 3 is a schematic block diagram of a transmission system to perform a measuring method for a transmission time by a previously considered first system;

FIG. 4 is a view sowing a configuration of a TS packet generated in the system in FIG. 2;

FIG. 5 is a schematic block diagram of another transmission system to perform the measuring method of the transmission time by the first system;

FIG. 6 is a block diagram of a digital broadcast receiver to perform the measuring method of the transmission time by a previously considered second system;

FIG. 7 is a view showing a configuration of an OFDM signal;

FIG. 8 is a view showing the configuration of the OFDM signal;

FIG. 9 is a frequency characteristic view of the OFDM signal;

FIG. 10 is a view showing a delay profile;

FIG. 11 is a block diagram to perform a previously considered delay profile measurement;

FIG. 12 is another block diagram to perform the other previously considered delay profile measurement;

FIG. 13 is an explanation view of the first embodiment of the present invention;

FIG. 14 is a view showing each subcarrier composing the OFDM signal;

FIG. 15 is a view showing an example of each subcarrier phase characteristic at fast Fourier transformation (FFT) window heading positions;

FIG. 16 is a block diagram showing another configuration to perform phase difference computing between adjacent subcarriers in the first embodiment of the present invention;

FIG. 17 is a view showing an arrangement example of pilot signals used in the first embodiment of the present invention;

FIG. 18 is a block diagram showing an application example of a time measuring apparatus according to a second embodiment of the present invention;

FIG. 19 is a block diagram showing an application example of a time measuring apparatus according to a third embodiment of the present invention;

FIG. 20 is a block diagram showing an application example of a time measuring apparatus according to a fourth embodiment of the present invention;

FIG. 21 is a block diagram showing an application example of a time measuring apparatus according to a fifth embodiment of the present invention;

FIG. 22 is a schematic block diagram of a SFN according to a sixth embodiment of the present invention; and

FIG. 23 is a block diagram showing a time measuring apparatus according to a seventh embodiment.

Best Mode for Carrying Out the Invention

Hereinafter, embodiments of the present invention will be described in detail with reference to the drawings.

(First Embodiment)

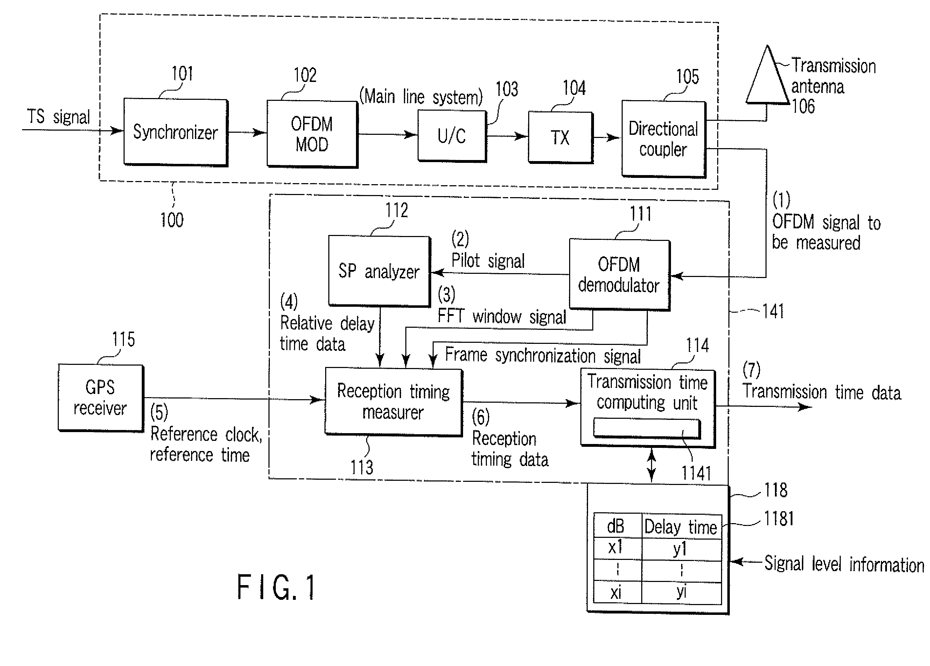

FIG. 1 is the block diagram showing the configuration of the time measuring apparatus according to the first embodiment of the present invention. The time measuring apparatus is installed in a transmitting station 100.

The transmitting station 100 includes a synchronizer 101, an OFDM modulator (OFDM MOD) 102, an up converter (U/C) 103, a transmitter (TX) 104 and a directional coupler 105.

In FIG. 1, a broadcast TS signal which arrived from a studio is received and detected at a synchronizer 101, and a frame synchronization signal is detected and is inputted to an OFDM modulator 102. The OFDM modulator 102 converts the output of the synchronizer 101 into an OFDM signal. The OFDM signal is frequency-converted from an intermediate frequency (IF) band to a radio frequency (RF) band by an up-converter 103, and is power-amplified at a transmission apparatus 104. Thereafter, the OFDM signal is transmitted from a time measuring apparatus 141 via a directional coupler 105 toward a predetermined region. Further, the RF band OFDM signal power-amplified at the transmission apparatus 104 is inputted to an OFDM demodulator 111 via the directional coupler 105.

The time measuring apparatus 141 includes an OFDM demodulator 111, a scattered pilot (SP) analyzer 112, a reception timing measurer 113 and a transmission designated time computing unit 114.

The OFDM demodulator 111 demodulates the received ODFM signal and demodulates the frame synchronization signal, an FFT window signal, an auxiliary channel (AC) signal and a SP signal. Among these signals, the packet, the AC signal and the SP signal are outputted to an SP analyzer 112, and the frame synchronization signal and the FFT window signal are output to a reception timing measurer 113.

An SP analyzer 112 generates a frequency characteristic signal based on the FFT window signal by interpolating the SP signal to apply inverse Fourier transform, acquires a delay profile from the frequency characteristic signal, and computes relative delay time information of the reception signal to a FFT window from the delay profile.

The reception timing measurer 113 measures the timing of the FFT window by using the reference time signal acquired from a GPS receiver 115 to add the relative delay time, then, measures symbol timing of the OFDM signal at a Fourier transformer input terminal.

A transmission designated time computing unit 114 is provided with a data table 1411 serving as storage means. The data table 1141 stores data output from the storage unit 118. The storage unit 118 is provided with a table 1181 indicating a previously measured relationship between delay time information from the reception input terminal up to the Fourier transformer input terminal and a signal level of the OFDM signal. That is, the storage unit 118 reads out the corresponding delay time information from the table 1181 to output it to the transmission time computing unit 114 based on signal level information provided separately. Then, the data table 1141 stores delay time information output from the storage unit 118.

The transmission designated time computing unit 114 subtracts the delay time information stored in the data table 1141 from the acquired symbol timing information of the OFDM signal, and thus acquires a symbol transmission time of the OFDM signal at the input end of a measuring apparatus, that is, the arrival time of the received OFDM signal.

Though the measurement of the symbol transmission time has described herein, it is possible to specify the symbol transmission time of the head of the OFDM frame among the symbol timing by using the timing of the frame synchronization signal which is output from the OFDM demodulator 111 to set it as the frame transmission time of the OFDM signal. It is also possible to measure a delay not less than one symbol by making possible to measure the frame transmission time.

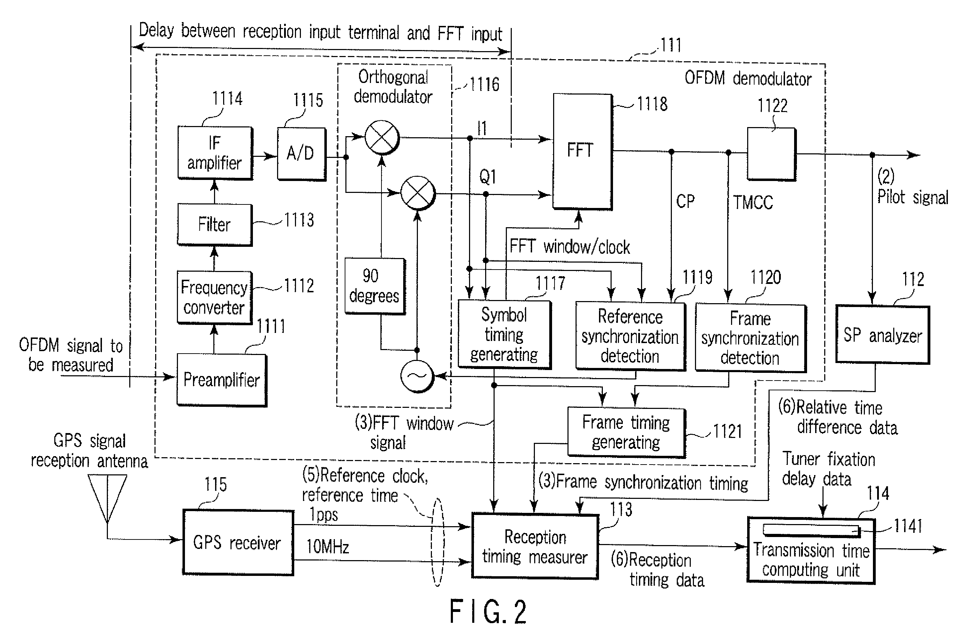

FIG. 2 is the block diagram showing the concrete configuration of the OFDM demodulator 111.

The OFDM signal which is input to the OFDM demodulator is power-amplified at a preamplifier 1111, is frequency-converted from an RF band into an IF band at a frequency converter 1112, and is made as an IF signal. A prescribed frequency component is extracted from the IF signal through a filter 1113, then, the IF signal is stabilized at a prescribed amplitude level at an IF amplifier. The output from the IF amplifier 1114 is converted into a digital IF signal at an A/D converter 1115 to be orthogonally demodulated at an orthogonal demodulator 1116, and it is made as complex type digital base band signals I1, Q1. The digital base band signals I1, Q1 acquired herein are supplied to a symbol timing generator 1117 that forms window generating means, an FFT processor 1118 and a frequency synchronization detector 1119, respectively.

The symbol timing generator 1117 delays the digital base band signals I1, Q1 by one symbol by using a RAM memory or a FIFO memory, executes complex correlation computing before and after the delay, detects the OFDM symbol timing, generates an FFT window signal necessary for FFT processing for the FFT processor 1118 based on the detection result and supplies the generated FFT window signal to the FFT processor 1118 and the reception timing measurer 113.

The FFT processor 1118 inputs the digital base band signals I1, Q1 and the FFT window signal to perform FFT processing to the digital base band signals I1, Q1 in accordance with the FFT window signal then converts it from a time axis signal into a frequency axis signal, and outputs the frequency axis signal to the frequency synchronization detector 1119, a frame synchronization detector 1120 and a carrier symbol extractor 1122 that forms carrier symbol extracting means, respectively.

The carrier symbol extractor 1122 extracts the SP signal placed in advance on the frequency axis out of the frequency axis signals output from the FFE processor 1118, and outputs the SP signal to the SP analyzer 112.

The frequency synchronization detector 1119 extracts a CP signal disposed on a frequency axis in advance from the frequency axis signal outputted from the FFT processor 1118 to perform frequency synchronous detection of the digital base band signals I1, Q1 in accordance with the CP signal, and the synchronous detection output is supplied to local oscillation control of the orthogonal demodulator 1116.

The frame synchronization detector 1120 is disposed from the frequency axis signal output from the FFT processor 1118 in advance to extract a TMCC signal specifying the OFDM frame synchronization and detects an OFDM frame synchronization signal from the TMCC signal to supply the detection result to a frame timing generator 1121.

The frame timing generator 1121 generates the OFDM timing signal based on an OFDM frame synchronization signal output from the frame synchronization detector 1120 to output it to the reception timing measurer 113.

Next, operations in the above-described configuration will be described.

For measuring the transmission time of an OFDM signal for broadcast, three systems were considered formerly.

(First System)

A first system is one that, when delay times of each device in a transmitting station are already known, inserts information indicating the delay times into the OFDM signal to transmit it to the transmitting station, then, can controls the timing in the transmitting station.

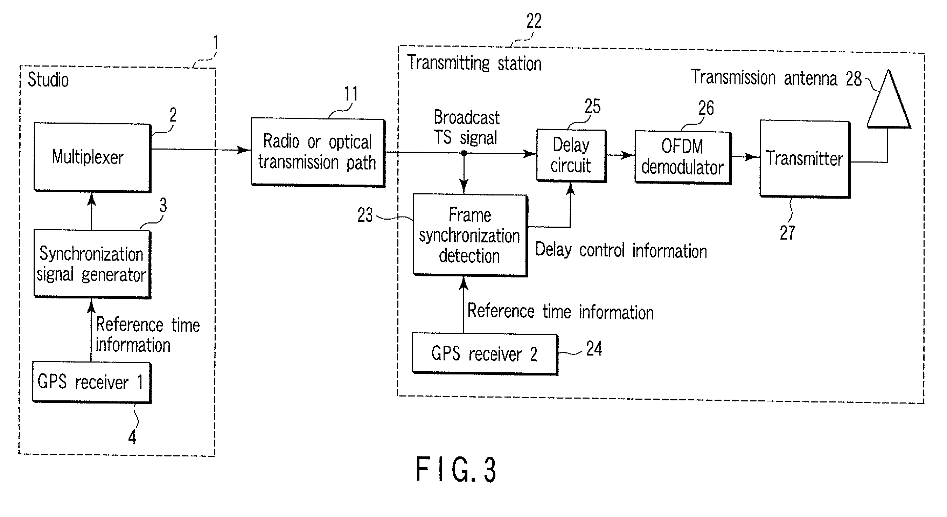

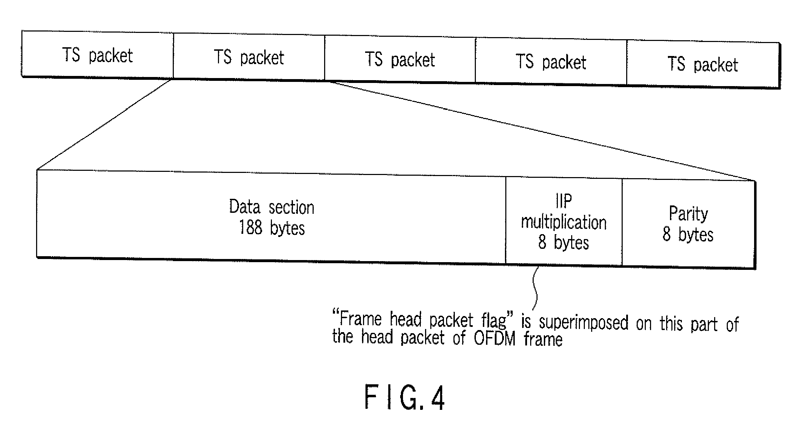

A studio 1, as shown in FIG. 3, transmits frame synchronous timing generated from a synchronization signal generator 3 to a multiplexer 2, and the multiplexer 2 multiplexes it at a prescribed position in a TS packet shown in FIG. 4 as a heading flag. A broadcast TS signal with a frame heading flag multiplexed thereto is transmitted to a transmitting station 22 by a radio or optical transmission path 11. The transmitting station 22 detects the frame heading flag by a frame synchronous detection circuit 23 to compare it with reference time information separately generated from a GPS receiver 24 , etc., and controls a delay circuit 25 so that a frame head is transmitted at a prescribed transmission time. The broadcast TS signal of which the timing is controlled by a delay circuit 25 is generated as the OFDM signal for broadcast by an OFDM modulator 26 in the next stage to be supplied to a transmitter 27.

Here, it is needed to measure signal processing and a transmission delay time of the OFDM modulator 26, the transmitter 27 and the like in advance and correct the transmission delay time to control the transmission time. However, if the transmission time is estimated in this way, for example, if OFDM modulators 26 manufactured by different manufactures are coexisted in the SFN, it is extremely hard for the first system to exactly manage the signal processing delay time. If the signal path in the transmitting station is modified, the transmission delay time varies sometimes and the problem such that an actual transmission time is gone off an estimated value occurs.

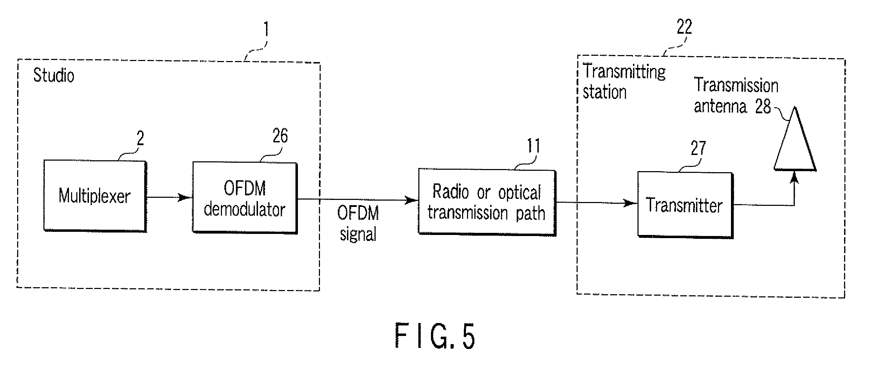

Further, as shown in FIG. 5, if the OFDM modulator 26 is disposed in the studio 1 and the OFDM-modulated signal is transmitted to the transmitting station 22 through the optical path 11, the delay time in the transmission path becomes a not negligible amount and it becomes difficult to maintain the transmission timing in a network within a prescribed error during modification/exchange of devices composing a line.

(Second System)

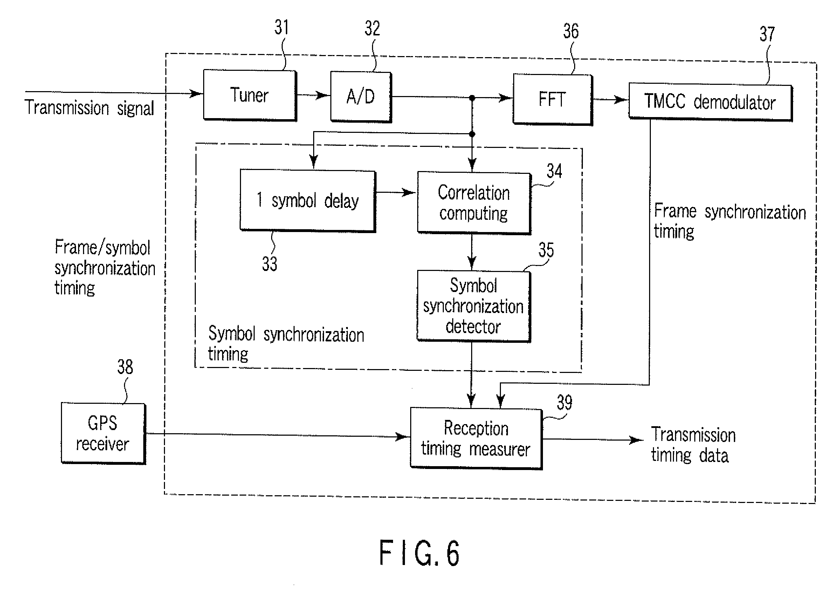

On the other hand, as shown in FIG. 6, a method for estimating a time of a transmission signal by utilizing a technique of a terrestrial digital broadcast receiver can be considered. In FIG. 6, a broadcast signal is converted into a prescribed IF or a base band frequency at a tuner 31. The IF or the base band frequency is OFDM-demodulated at an FFT converter 36 in the next stage after being converted into a digital signal by an A/D converter 32.

A TMCC demodulator 37 detects a TMCC carrier from an OFDM demodulator output to detect an OFDM frame synchronous word based on the TMCC carrier.

The output from the A/D converter 32 is supplied to a symbol synchronous detection composed of a one symbol delay circuit 33, a correlation computing circuit 34 and a symbol synchronous detection circuit 35.

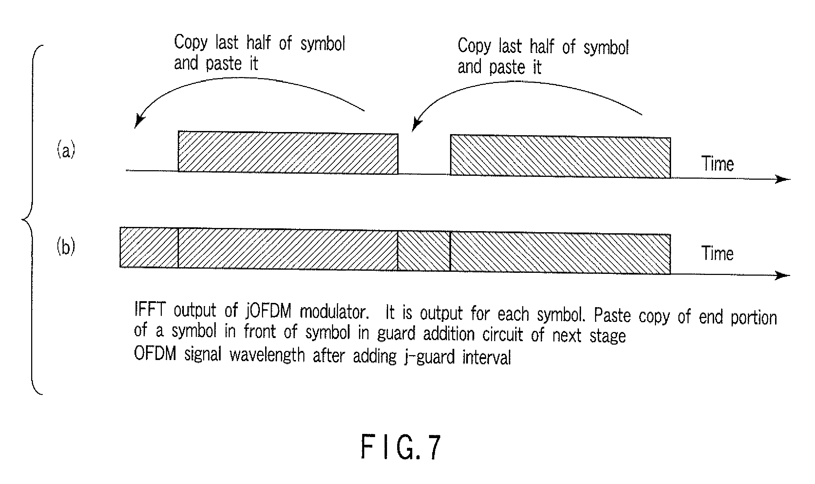

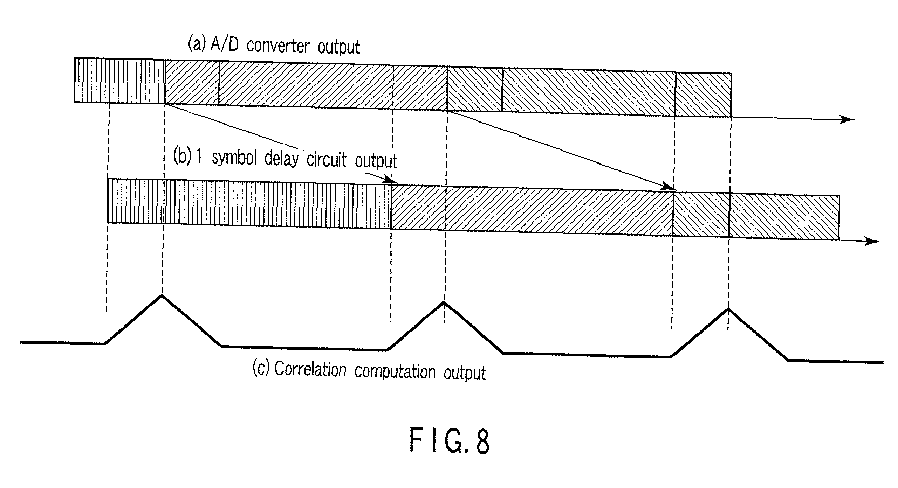

A signal in which a symbol latter half is copied on a front side of a symbol is added as a guard interval at an OFDM modulator as shown in FIG. 7. Accordingly, as shown in FIG. 8, if the correlation computing between a reception signal and a signal which is a delayed signal thereof by one symbol is conducted, a strong correlation is appeared during a period of a guard interval cycle, thereby, the OFDM symbol timing can be detected.

Then, the symbol synchronous detector 35 detects the OFDM symbol timing by using a correlation computing output. This second system can measure a reception timing of a broadcast signal by comparing the OFDM frame timing and the OFDM symbol timing with a time signal generated from a GPS receiver 38.

However, the second system hardly measures the transmission time with high precision because of the following reason.

Otherwise stated, as shown in FIG. 8(c), the correlation output has no precipitous peak, so that timing positions are likely deviated depending on a detection setting level of the correlation computing output. Therefore, there is a risk to occur an error of timing depending on a reception level. If noises are superimposed on a wave of the output, an error in the timing is produced in consequence of the superposition. Moreover, the reception signal at the broadcast relay station is generally affected by multi-pass, so that the correlation computing output does not become an ideal triangular and produces an error in the timing.

Consequently, the use of reproduction OFDM symbol timing of the broadcast receiver as it is has the problem that the error tends to be produced by the above-mentioned external factors.

(Third System)

On the other hand, a technique to measure a delay time of a multi-pass wave has been put to practical use by making the most use of a feature of the OFDM signal.

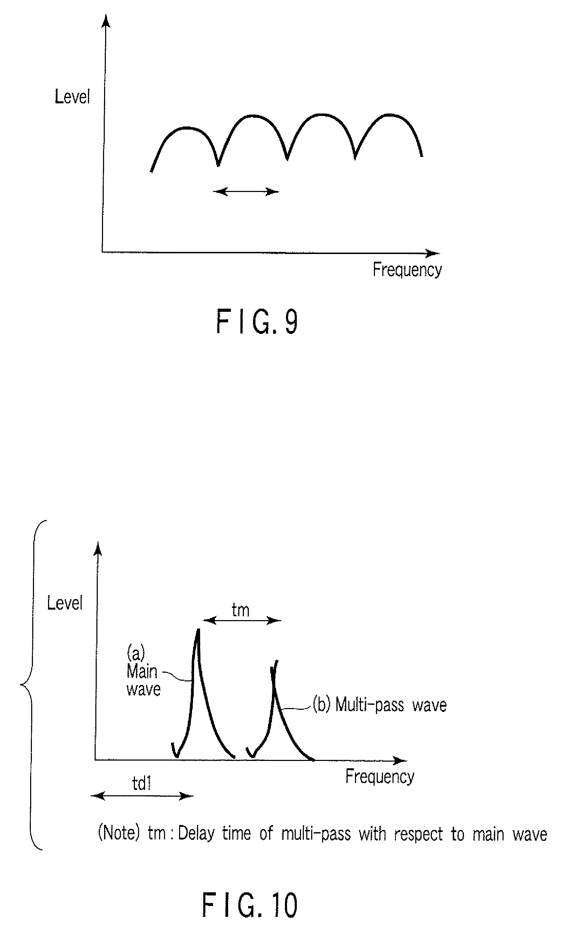

FIG. 9 shows a frequency characteristic of the OFDM signal in the case of presence of a multi-pass wave. FIG. 10 shows a delay profile in this case.

A frequency interval fd (Hz) of a dip of the frequency characteristic becomes the inverse number of a delay time td (sec) of the multi-pass wave. Such a frequency characteristic can be obtained by measuring the SP signal inserted into the OFDM signal. Further, the delay profile can be obtained by executing orthogonal conversion of the above-described frequency characteristic. It is known that a delay time measurement between a main wave and a multi-pass wave in this case can be performed with relatively high precision (in a theoretical sense, a measurement resolution of twice of the inverse number of a sampling frequency ft can be obtained. In the case of digital broadcast in Japan, since the frequency interval ft (Hz) is 8.126 MHz, the measurement resolution becomes around 250 ns).

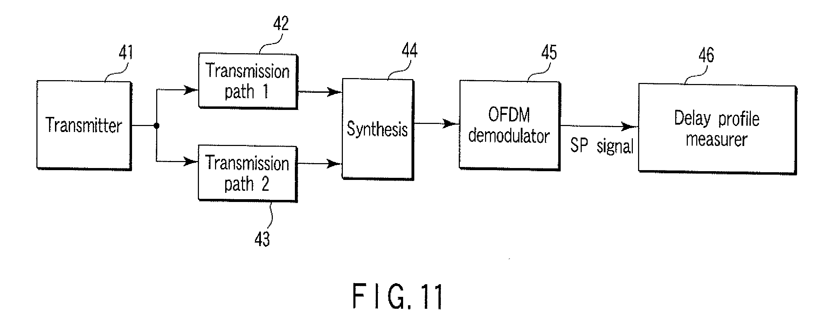

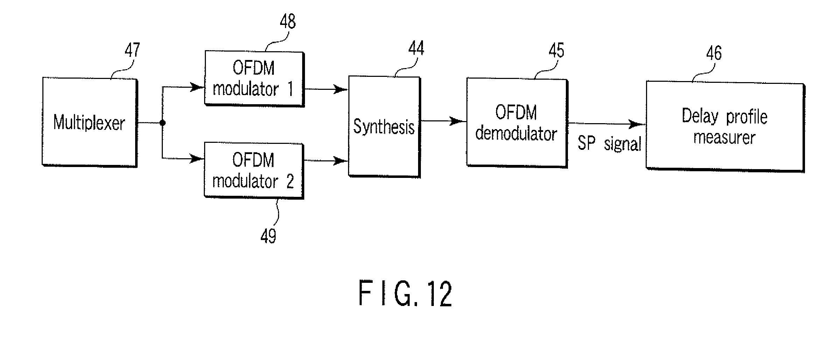

It is possible, as shown in, for example, FIG. 11, to measure a delay time difference between different paths. If signal processing delay times of an OFDM modulator 48 and an OFDM modulator 49 are within a prescribed range, a measurement system as shown in FIG. 12 can measure relative processing delay time differences of the individual OFDM modulators 48, 49.

This third system is effective in the case of a measurement of delay time differences of a plurality of transmission devices in a factory or the like, but it is needed to accurately know a transfer delay from a transmitting station to a measurement point so as to measure relative delay times among transmitters disposed at different places. However, since a terrestrial wave has a large number of multi-passes and its property varies in accordance with an environmental condition, it is difficult to accurately know the transmission profile from the transmitting station up to the measurement point. Since an electric wave to be a reference is required, it is necessary to select places possible to receive the electric wave at both reference station and station to be measured, a complicate operation such as pre-research for a measurement is needed. From such points of view, the third system is not appropriate as an apparatus to measure the transmission times at each transmitting station.

(Operations in the First Embodiment)

Hereinafter, the first embodiment of the present invention will be described.

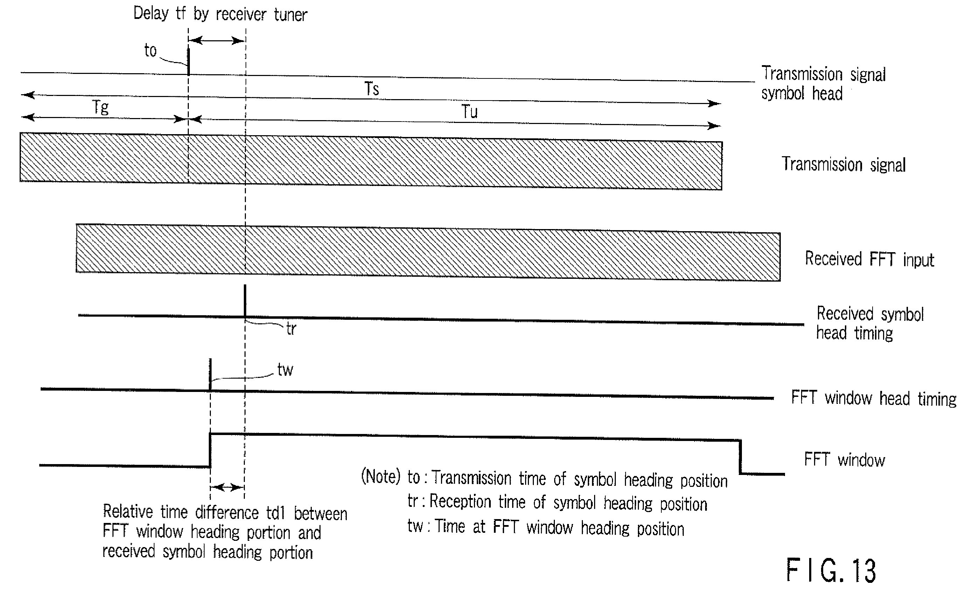

FIG. 13 shows a timing relation between the reception OFDM signal and the FFT window to perform FFT demodulation, at the OFDM demodulator 111.

Relations among each subcarrier and the FFT window composing the OFDM signal will be explained herein.

The OFDM signal generally expressed in formula [1], wherein k is a subcarrier number of a whole band in which the subcarrier number at transmission band low end is zero; n is a symbol number; K is a subcarrier total number; Ts is a symbol period length; Tg is a guard period length; Tu is an effective symbol length; fc is an RF center frequency; Kc is a subcarrier number corresponding to a center frequency of an RF signal; c(n, k) is a modulated component (complex coordinate expression) corresponding to the symbol number n and subcarrier number k; and ø (n, k, t) is a complex operator (complex expression of phase rotation by unit amplitude) of a carrier symbol corresponding to the symbol number n and subcarrier number k.

$$s(t) = \mathrm{Re}\left\{ \exp(\ j\,2\pi fct\ ) \sum_{n=0}^{\infty} \sum_{k=0}^{K-1} c(n,k) \Psi(n,k,t) \right\}$$

wherein,

$$\Psi(n,k,t) = \exp\left\{ j\,2\pi \frac{k-Kc}{Tu}(t - Tg - nTs) \right\}$$

$$nTs \leqq t < (n+1)Ts$$

$$\Psi(n,k,t) = 0 \qquad t < nTs, \qquad (n+1)Ts \leqq t \qquad \cdots [1]$$

In formula [1], the setting of ø (n, k, t)= 0 is a method for treating the time t as a symbol of (n-1)-th or (n+1)-th, if the time t is out of a range of a symbol of the n-th [namely, t < nTs, (n+1)Ts ≦ t].

Therefore, for obtaining phase angles of each subcarrier, it is enough to consider within the range [nTs ≦ t < (n+1)Ts] of the symbol of n-th.

Accordingly, phase angles Φ(n, k, t) of each carrier symbol are expressed as the following formula [2] from formula [1].

$$\Phi(n,k,t) = 2\pi \frac{k-Kc}{Tu}(t - Tg - nTs) \qquad [2]$$

Formula [2] represents that phases of all subcarriers become equivalent to zero at a heading position (t = Tg + nTs) of an effective symbol.

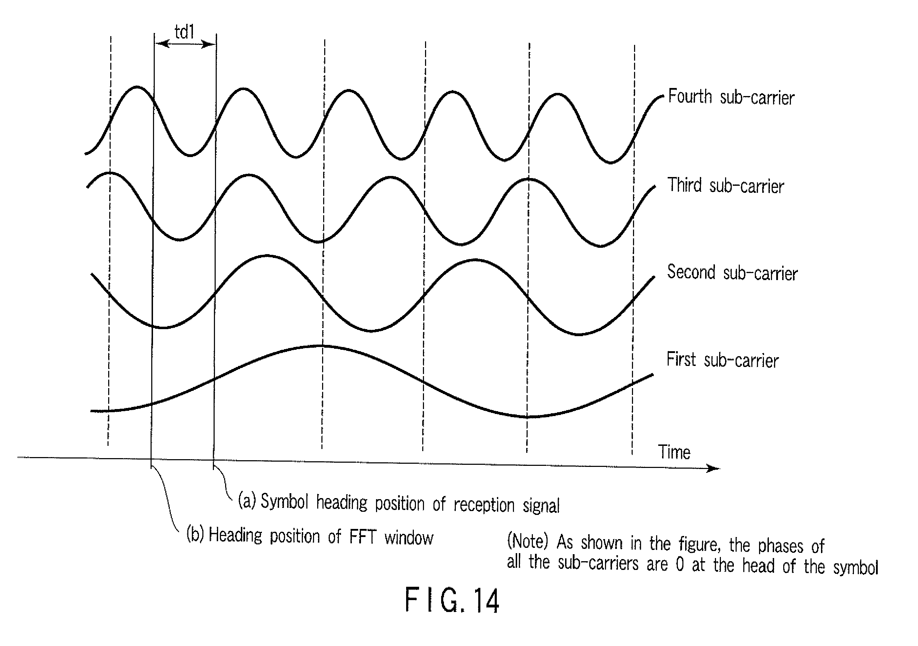

FIG. 14 shows states of each subcarrier composing the OFDM signal. To be easily understood, the case that the modulated component c (n,k) becomes one to all of the symbol numbers n and the subcarrier numbers k is shown.

At (a) in FIG. 14, the timing corresponds to the heading position of the effective symbol.

Here, it is assumed that the heading position of the FFT window to FFT-demodulate the OFDM signal is deviated by -td 1 from an effective symbol heading position of the OFDM signal as shown FIG. 13 (here, a minus time indicates precedence of a time). In this case, the heading position of the FFT window becomes timing shown by (b) in FIG. 14.

As known from FIG. 14, at the heading position of the FFT window, phases of each subcarrier advance in proportion to differences from a center frequency. Accordingly, the phases of each subcarrier at the heading position of the FFT window are given as follows in accordance with formula [2].

$$\Phi\{n,k,(Tg + nTs - td1)\} = 2\pi \frac{k-Kc}{Tu}(-td1) \qquad [3]$$

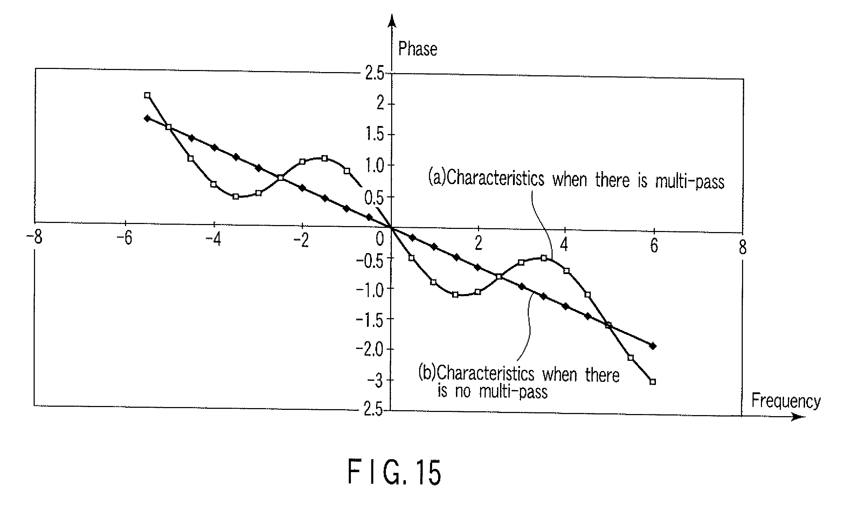

As known from formula [3], the phases of each subcarrier are proportional to differences (k - Kc) from the center frequency. A characteristic curve (a) in FIG 15 shows a relation between frequencies and phases. The curve (a) in FIG. 15 indicates a relation between the frequencies and phases. In FIG. 15, it is assumed that the vertical axis indicates delays of phases and the phases are delayed in approaching plus.

In a radio engineering field, it is known that a rate of change (1/2 π X dΦ/df) of a phase in the case of change in frequency gives a delay time in a transmission system.

From formula [3], a relative phase difference $\triangle\Phi$ between adjacent subcarriers is given the following formula [4].

$$\Delta\Phi = \Phi\{n, k, (Tg + nTs - td1)\} - \Phi\{n, (k-1), (Tg + nTs - td1)\} = 2\pi\frac{td1}{Tu} \quad [4]$$

The $\triangle\Phi$ given by formula [4] represents a slant of a linear line of (a) in FIG. 15.

A frequency interval $\triangle f$ between the subcarriers of the OFDM signal is given as the inverse number of the effective symbol length Tu.

Accordingly, a delay time $\triangle t$ is obtained as the following formula [5] from formula [4].

$$\Delta t = (1/2\pi)\left(2\pi\frac{td1}{Tu}\right)/(1/Tu) = td1 \quad [5]$$

As known from formula [5], the delay time $\triangle t$ obtained from the phases of each subcarrier given by Fourier-transforming the OFDM signal extracted by the FFT window is the time difference -td 1 between the heading position of the FFT window and the effective symbol heading position of the OFDM signal.

Here, a reception time tr of the OFDM signal can be obtained by measuring a time tw of the heading position of the FFT window by using the reference time signal and subtracting the time difference -td 1 from the tw as follows.

$$\text{tr} = \text{tw} - (-\text{td } 1) \quad [6]$$

The FFT window is generally obtained from correlation computing of a guard interval section as shown in FIG. 8, and tends to vary in consequence of the noise, reception level, multi-pass and the like as stated above.

Here, the case of variation of the tw in formula [6] will be described.

In FIG. 13, the deviation (precedence) of the FFT window position by Δtw causes the relative time difference -td 1 against the effective symbol heading position to vary to (-td 1-Δtw).

Accordingly, Δt obtained from formula [4] varies as the following formula.

$$\Delta t = -\text{td } 1 - \Delta\text{tw} \quad [7]$$

With substitution of these results into formula [6], the computing result for the reception time in the case of deviation of the FFT window can be obtained as the following formula.

$$tr' = (tw + \Delta tw) + (td1 - \Delta tw) = tr \quad [8]$$

As known from formula [8], according to the presented time measuring apparatus 141, even when the reproduction timing of the FFT window is varied depending on reception conditions, since its variation component is cancelled by the relative time difference information between the effective symbol heading position of the reception signal and the heading position of the FFT window, it is possible to accurately measure the time of the effective symbol heading position of the reception OFDM regardless of the reception conditions.

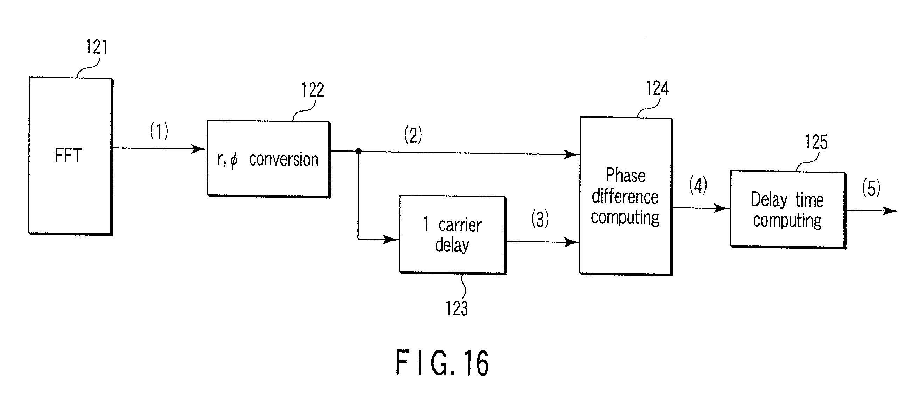

An apparatus to measure the relative time difference td 1 between the effective symbol heading position of the reception OFDM signal and the heading position of the FFT window may be configured as shown in FIG. 16. That is, I, Q signals processed at a FFT processor 121 are supplied to a coordination converter 122. The converter 122 converts the I, Q signals represented with orthogonal coordinates into amplitude/angle signals (r, $\phi$) represented with polar co-ordinates. Outputs from the converter 122 are supplied to a one carrier delay unit 123 and a phase difference computing unit 124, respectively.

The one carrier delay unit 123 delays the amplitude/angle signal of one carrier by using, for example, the RAM memory of FIFO memory and supplies the delayed output to the computing unit 124. The computing unit 124 receives the input signal and output signal of the delay unit 123 and obtains a phase difference of a carrier symbol having a known modulated component. This phase difference data is divided by a delay time computing unit 125 by a frequency difference. Thereby, the relative delay time information on the reception signal against the FFT window signal can be easily acquired.

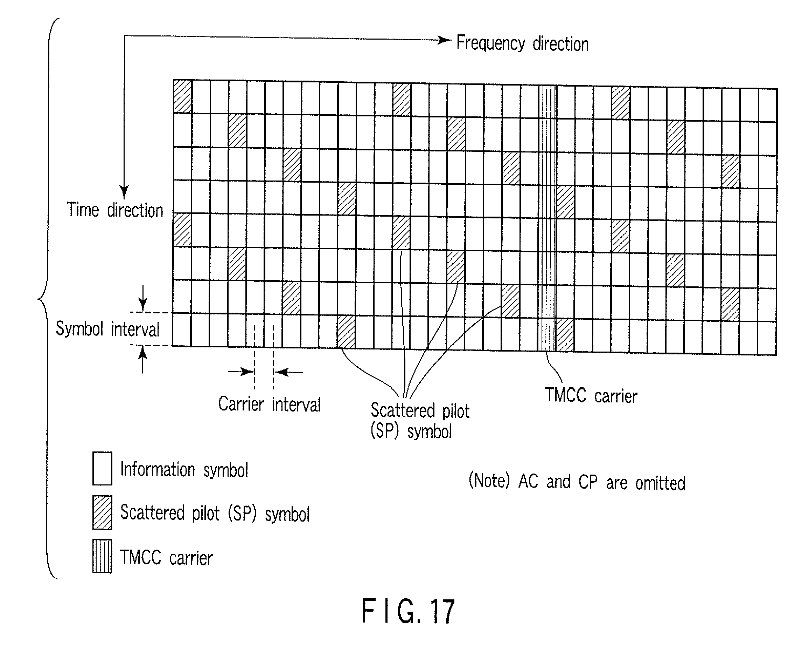

Here, a modulated component of a scattered pilot (SP) signal embedded in the OFDM signal is known and disposed with specific intervals in a frequency direction and a time direction, so that it is the easiest way to acquire the relative time difference td 1 by using the SP signal. For reference, an aspect of the pilot signals multiplexed onto the OFDM signal is shown in FIG. 17.

When acquiring the relative phase differences among each subcarrier, the symbols of which the modulated components are known as described above may be used. Accordingly, it is also possible to use continuous pilot signals and AC signals other than the SP signals. However, since the continuous pilot signals and AC signals are disposed with frequency intervals wider than those of the SP signals, if the td 1 is large, ambiguities occur, so that attentions should be paid during computing operations.

The AC signal is modulated by binary phase shift keying (BPSK), so that it is necessary to eliminate the modulated components in advance.

As like a measurement at a transmitter output terminal, if the OFDM signal has relatively small distortions, the first embodiment can obtain the relative time difference by simple difference calculus, but in the case of a measurement at a relay broadcast station or the like, the influence exerted by multi-pass can no longer be disregarded.

The frequency characteristic shown in FIG. 9 indicates amplitudes of each subcarrier when the signal to be measured is influenced by the multi-pass. Phases of each subcarrier have not linear frequency-phase characteristics as shown in a wave (b) in FIG. 15. In this case, the relative time difference is obtained by either one method given below.

    (1) A method for obtaining a relative time difference by measuring relative phase differences among a plurality of subcarriers and averaging the phase differences to compute a rate of change to a frequency to obtain the relative time difference.
    (2) A method for obtaining a delay profile by performing inverse Fourier transform for a frequency characteristic obtained from the scattered pilot signals as sample points.

A delay profile computing result in the case of presence of multi-pass in a signal to be measured is shown in FIG. 10. Since, a time reference of a delay profile (t=0) computed herein becomes heading timing of the FFT window, a delay time td 1 of a main wave [represented as a wave (a) in FIG. 10] becomes to indicate the relative time difference between an FFT window head and an effective symbol head of a main component of a reception signal. With using of delay profile computing, when there is the multi-pass component in the signal to be measured, since the relative time difference between the effective symbol heads of the main wave and the multi-pass wave is shown separately, the relative time difference of the symbol heading position of the main wave to the FFT window heading position can be easily computed.

The method for measuring the reception time of the symbol heading position of the OFDM signal at the FFT processor input terminal has been described hereinbefore.

The method of measuring the delay time of the OFDM symbol time with respect to the FFT window heading position in the case where the time reference point of the OFDM symbol signal is set at the effective symbol heading position has been described. In the case where the time reference of the OFDM symbol time is specified at the heading position of all the symbols including the guard intervals, the delay time of the OFDM symbol time can be obtained by subtracting the time difference Tg between the effective symbol heading position to the heading position of all the symbols from the measurement result. When the heading position of all the symbols is set to the time reference, the formula for obtaining tr is changed as follows.

$$tr = tw - (-td1) - Tg$$

On the other hand, when the time measuring apparatus 141 regarding the first embodiment of the present invention is used to measure a transmission time tm, it is needed to correct the signal processing delay time tf between the reception input terminal and the FFT processor 1118 as expressed by the following formula [9].

$$tm = tr - tf \qquad\qquad [9]$$

When the delay time tf between the reception input terminal and the FFT processor 1118 is measured in advance and stored in the data table 1141 in the transmission designated time computing unit 114, and the measured reception time tr is subjected to the correction indicated by the formula [9], the transmission designated time computing unit 114 can be used as the designated time measurer 114.

For the measurement of the signal processing delay time, general measuring equipment such as a network analyzer used for a delay time measurement of an analog signal can be used.

When the measuring apparatus is used for a measurement in a wide reception level and also when variations in signal processing delay time is worried resulting from change in operation point of an amplifier and a gain control circuit, it becomes possible to measure a time with high precision by changing the reception level to measure the delay time and registering it in the table 1181 in the storage unit 118 and by measuring the reception level at every measurement to read out the corresponding delay time information from the table 1181.

The transmission or reception time measuring method of the symbol head of the OFDM signal has been described herein. But, for example, when two transmitting stations separated with each other individually measure the transmission times and compare the measurement results with each other to obtain the relative delay time difference, it is supposed that both delay times extend to one symbol or longer.

In such a case, the measuring method can measure the reception or transmission time by bringing a TMCC subcarrier superimposed on the OFDM signal into the FFT processing, and detecting a frame synchronization signal disposed at the frame head to specify the frame heading symbol.

Note that, in the terrestrial digital broadcast system in Japan and in Europe, since a code indicating add or even is added to the frame synchronization signal, the measuring method can measure the reception or transmission time within two frame periods at the maximum without ambiguity by utilizing this identification code.

(Second Embodiment)

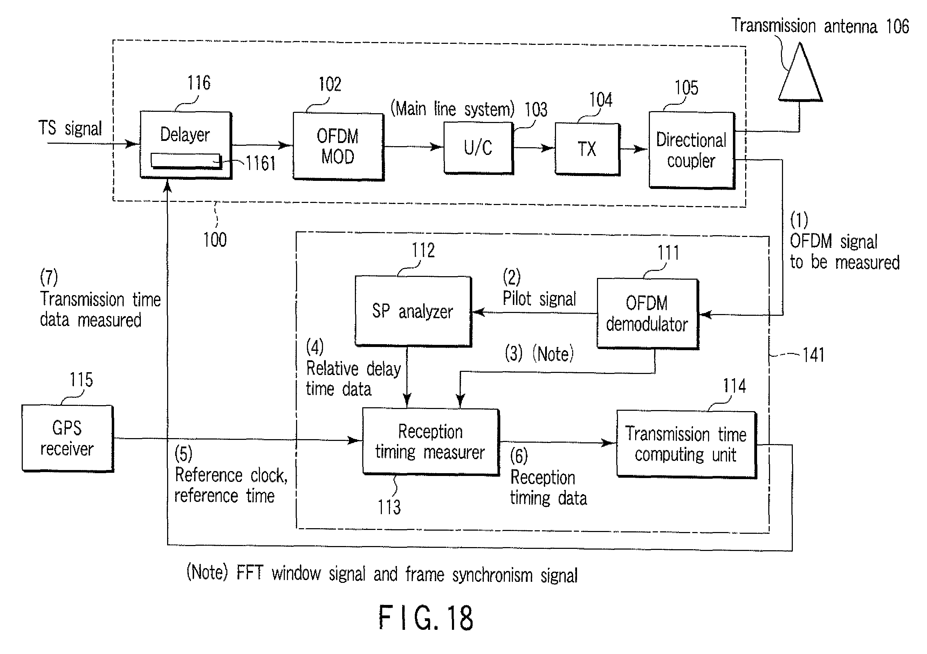

FIG. 18 is the block diagram showing the example of the application of the transmission time measuring apparatus regarding the second embodiment of the present invention. In FIG. 18, the same parts as those of above-described FIG. 1 are given the same marks and the detailed explanation about them will be eliminated.

In the second embodiment, a delayer 116 for delaying a broadcast TS signal is provided at a front stage of an OFDM modulation apparatus 102. A transmission time measurer 114 transmits transmission time information about the measured OFDM signal for broadcast to the delayer 116. The delayer 116 is provided with a delay controller 1161. The delay controller 1161 controls the delay time of the delayer 116 based on the transmission time information given from the transmission designated time measurer 114. Then, the delayer 116 delays the input TS signal by the controlled delay time, and outputs it.

Therefore, since the second embodiment transmits the transmission time information of the OFDM signal for broadcast measured by the transmission designated time measurer 114 and controls the delay time so as to match it with a specified transmission time, the need to detect the frame synchronization signal defined in the above-mentioned ARIBSTD-B31 is eliminated and the SFN can be structured with a simple system.

(Third Embodiment)

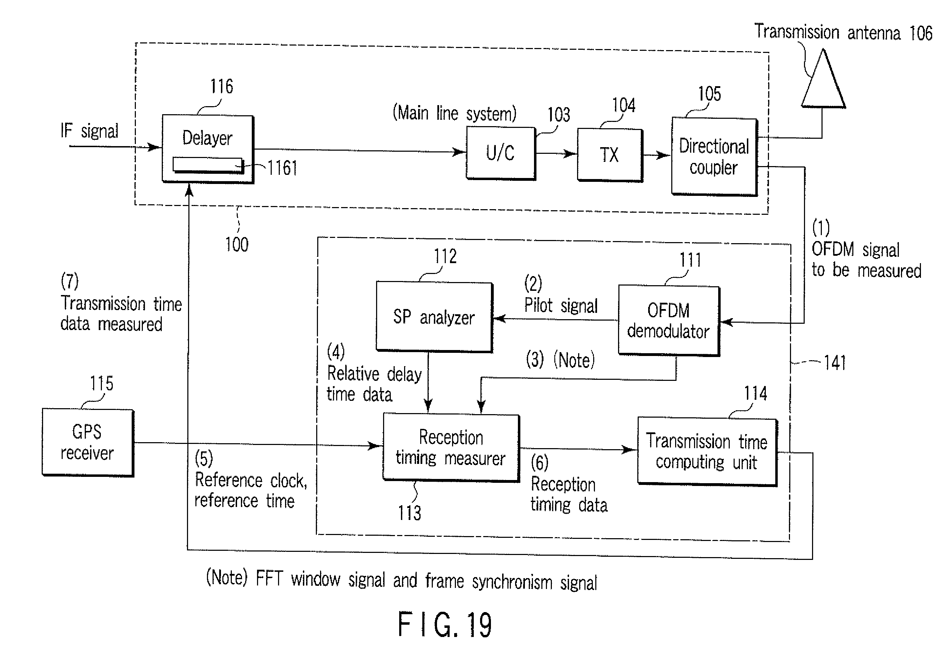

FIG. 19 is the block diagram showing the example of the application of the transmission time measuring apparatus according to the third embodiment of the present invention. In FIG. 19 the same parts as those of above-mentioned FIG. 18 are given the same marks to eliminate the detailed explanation about them.

In the third embodiment, when performing IF transmission between a studio and a transmitting station, the delayer 116 for delaying the IF signal is provided at the front stage of the up-converter 103 of the transmitting station. The delayer 116 operating in an IF band is used. The transmission designated time computing unit 114 transmits transmission time information about measured transmission OFDM signal for broadcast to the delayer 116. The delayer 116 is provided with a delay controller 1161. The delay controller 1161 controls the delay time of the delayer 116 based on the transmission time information given from the transmission designated time measurer 114. Then, the delayer 116 delays the input TS signal by the controlled delay time, and outputs it.

Therefore, the third embodiment brings about the same effect as that of the second embodiment.

This third embodiment corresponds to an IF transmission system and can be applied as it is even to transmission time control of a transmitting station in a broadcast wave relay broadcast system to receive and re-transmit a broad wave from a key station. Further, since the third embodiment can measure the transmission time at the transmission output terminal in the same measuring method regardless of the transmission system between the studio and the transmitting station, it becomes possible to manage a measurement of a network in the same data format regardless of configurations of each transmitting station forming the SFN and it becomes possible to select the transmitting station with an appropriate configuration corresponding to a situation in structure of the network. Since the measurement management of the data becomes in the same form regardless of the configurations of the transmitting stations, the management is performed with significant ease.

(Fourth Embodiment)

The fourth embodiment of the present invention measures the delay time difference of the transmission system by using the transmission time measuring apparatus regarding the first to the third embodiments.

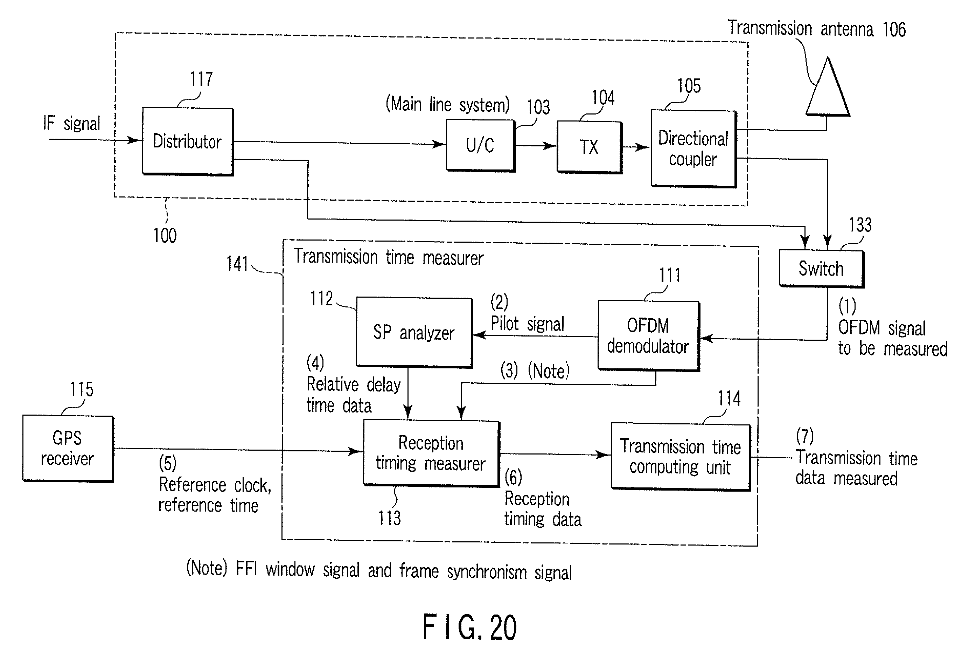

FIG. 20 is the block diagram showing the example of the application of the transmission time measuring apparatus regarding the fourth embodiment of the present invention. In FIG. 20, the same parts as those of the above-described FIG. 1 are given the same marks and the detailed explanation about them will be eliminated.

This fourth embodiment is one to measure the delay time from an input up to an output to and from the transmitting station in the IF transmission system. A switch 133 disposed at a transmission time measuring apparatus 141 of the present invention switches the input and output of the transmitting station.

At first, the switch 133 selects an output signal from a distributor 117, and the measuring apparatus 141 measures the transmission time of the output signal from the distributor 117 to make the measurement result as t1. Next, the switch 133 selects the output signal from the directional coupler 105, and the measuring apparatus 141 measures the transmission time of the output signal from the coupler 105 to make the measurement result as t2.

Then, the measuring apparatus 141 can obtain the delay time td required to process in the transmitting station by subtracting the measurement result t2 from the measurement result t1. That is, the measuring apparatus can be utilized also as a measuring apparatus of the delay time difference.

(Fifth Embodiment)

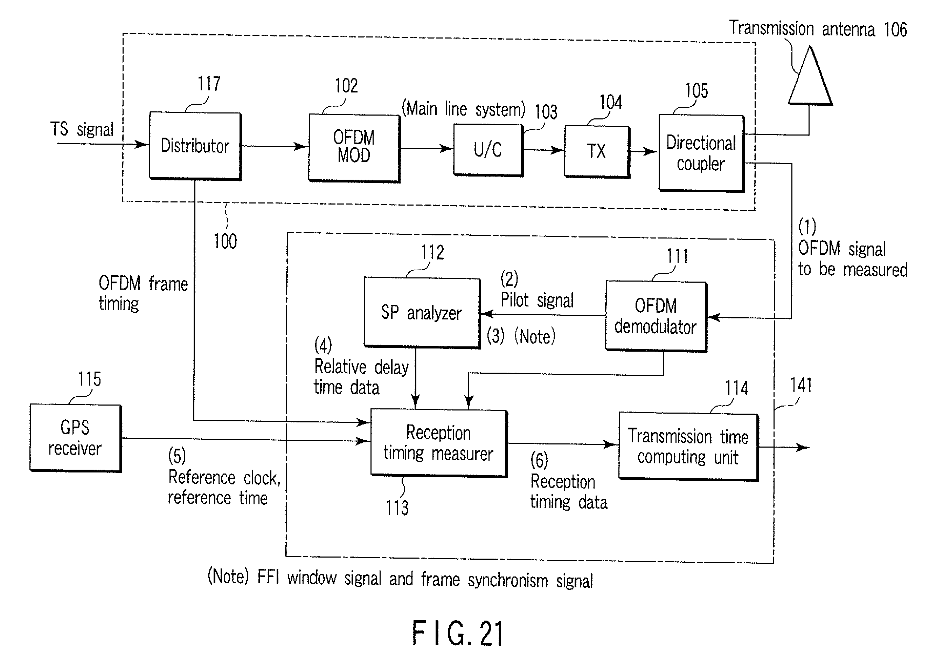

FIG. 21 is the block diagram showing the example of the application of the transmission time measuring apparatus according to the fifth embodiment of the present invention. In FIG. 21, the same parts as those of the above-described FIG. 1 are put the same marks and the detailed explanation will be eliminated.

In the fifth embodiment, the synchronizer 101 detects a frame heading flag inserted to the broadcast TS signal. The detected frame heading flag is transmitted to the reception timing measurer 115 in the measuring apparatus 141 as an OFDM frame timing signal of an input TS signal. The timing measurer 113 can obtain the delay time td at the transmitting station by subtracting the time t2 of the OFDM frame timing from the transmission time t1 of the output from the coupler 105. In this case, the measuring apparatus 141 measures the delay time td at equipment including such as the OFDM modulator 102 included in a transmission system to be measured.

Note that, the forgoing fourth and fifth embodiments are examples to measure the delay times at the same transmitting station and it is necessary for an achievement of the SFN to grasp a total delay amount including the transmission system such as the STL.

(Sixth Embodiment)

In a sixth embodiment of the present invention, a total delay of a transmission apparatus and a transmitting station which form the SFN is measured.

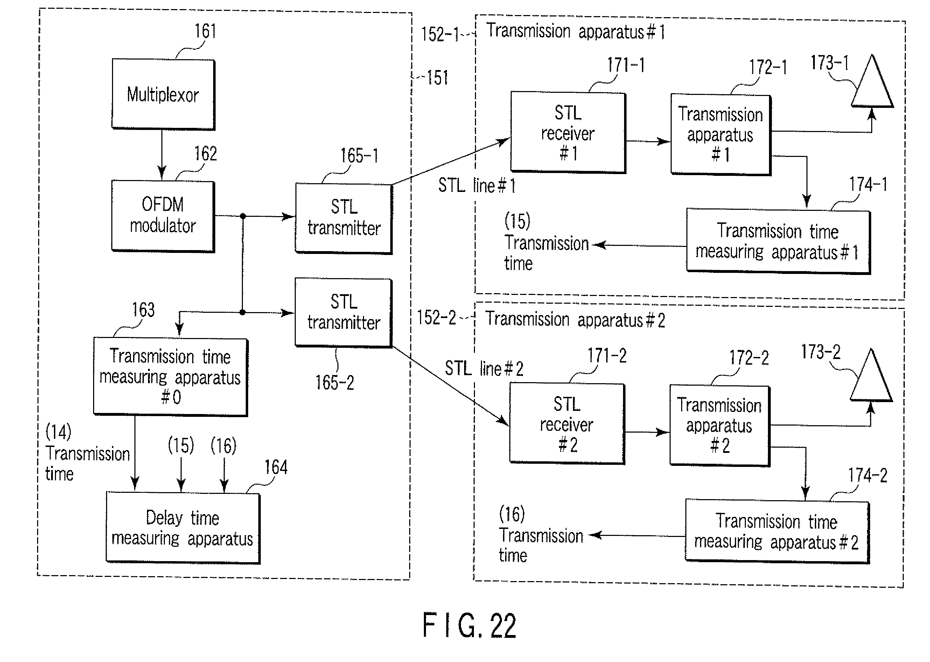

FIG. 22 is the schematic block diagram of the SFN according to the ninth embodiment of the present invention.

The detailed structures of transmission time measuring apparatuses 163, 174-1, and 174-2 in FiG. 22 are the same as the transmission time measuring apparatus shown in FIG. 1. At a studio 151, a broadcast TS signal is generated at a multiplexer 161, and is transmitted to an OFDM modulator 162. The OFDM modulator 162 receives the TS signal to generate an OFDM broadcast signal.

The transmission time measuring apparatus 163 installed in the studio 151 detects OFDM frame timing of the output of the OFDM modulator 162, and measures the time at the time of detecting as the transmission time t0. The measured transmission time information is supplied to a delay time measuring apparatus 164.

On the other hand, the output of the OFDM modulator 162 is respectively transmitted to transmitting stations 152-1 and 152-2 via STL transmission apparatuses 165-1 and 165-2. The transmission time measuring apparatus 174-1 installed in the transmitting station (#1) 152-1 determines the transmission time t1 of the output of the transmission apparatus 172-1, and transmits the measured data to the delay time measuring apparatus 164 in the studio 151. Further, the transmission time measuring apparatus 174-2 installed in the transmitting station (#2) 152-2 determines the transmission time t2 of the output of the transmission apparatus 172-2, and transmits the measured data to the delay time measuring apparatus 164 in the studio 151.

The delay time measuring apparatus 164 is a mere computing circuit, and computes the total delay amounts td 1 and td 2 from the respective transmission time data by using the following expression. Note that td 1 is a total delay amount from the output of the OFDM modulator 162 in the studio 151 to the output of the transmission apparatus 172-1 in the transmitting station 152-1. On the other hand, in the same way, td 2 is a total delay amount from the output of the OFDM modulator 162 to the output of the transmission apparatus 172-2 in the transmitting station 152-2.

$$\text{td } 1 = \text{t1} - \text{t0}$$

$$\text{td } 2 = \text{t2} - \text{t0}$$

In the sixth embodiment, the case in which a radio STL is the IF transmitting method is shown as the example. However, the OFDM modulator is installed in a transmitting station, and the synchronizer 101 is used in place of the transmission time measuring apparatus 163 in the case of the TS transmitting method in which TS signal is transmitted through the STL circuit, and the frame heading flag in the TS signal is detected, and due to time data thereof being supplied as the transmission time t0 to the delay time measuring apparatus 164, the total delay amount including the STL apparatus and the circuit can be measured in the same way as in the case of the IF transmitting method. Note that, when a multiplexer outputs the frame heading flag, due to the timing thereof being used as t0, the synchronizer 101 can be omitted.

(Seventh Embodiment)

The seventh embodiment is designed for such a case where the relative delay time difference between the STL circuit (#1) and STL circuit (#2) exceeds the symbol interval, for example, in the sixth embodiment. In such a case, the carrier symbol to be measured cannot be specified with the time measurer presented in the first embodiment, and an error occurs in the measurement of the delay time with respect to the reference time. In order to prevent this error, the carrier symbol of the frame head is identified and the delay time with respect to the reference time is measured.

It should be noted that the seventh embodiment is described in connection with such a case where this embodiment is applied to a particular situation of the sixth embodiment, but it can be applied to other embodiment to obtain similar advantageous effects.

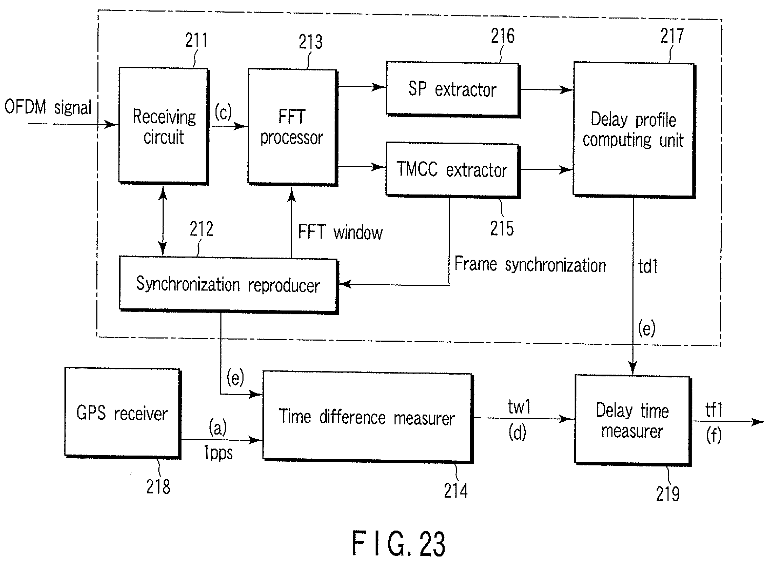

FIG. 23 is a block diagram showing a time measurer according to the seventh embodiment.

In FIG. 23, an incoming OFDM signal is received by the receiving circuit 211, where the signal is converted into a digital signal, and then the digital signal is supplied to both of a synchronous reproducer 212 and an FFT processor 213.

The synchronous reproducer 212 delays the digital signal by one symbol using a RAM memory or FIFO memory, and detects the OFDM symbol timing by carrying out a complex correlation calculation before and after the delay. Based on the detection result, an FET window signal necessary for an FFT process to the FFT processor 213 is generated, and the FET window signal is supplied to the FET processor 213 and a time difference measurer 214.

As the digital signal and FFT window signal are input thereto, the FFT processor 213 carries out an FFT process to the digital signal in accordance with the FFT window signal to convert it from a time axial signal to a frequency axial signal, and outputs the frequency axial signal to a TMCC extractor 215 and an SP extractor 216 that forms the carrier symbol extracting means.

The TMCC extractor 215 serves to extract from the frequency axial signal output from the FFT processor 213 a TMCC signal arranged in advance on the frequency axis and specifies the OFDM frame synchronism. Thus, the TMCC extractor 215 detects the OFDM frame synchronization signal from this TMCC signal and supplies the detection result to the synchronous generator 212.

The SP extractor 216 serves to extract from the frequency axial signal output from the FFT processor 213 an SP signal arranged in advance on the frequency axis, and then outputs the SP signal to a delay profile computing unit 217.

The delay profile computing unit 217 obtains a delay profile corresponding to the difference in timing between the output from the receiving circuit 211 and the synchronous reproducer 212 from the SP signal extracted by the SP extractor 216.

A delay time measurer 214 measures the time difference between the reference time signal obtained by the GPS receiver 218 and the synchronous reproducer 212, and outputs the measurement result to a delay time corrector 219.

The delay time corrector 219 corrects the time difference information output from the time difference measurer 214 based on the delay profile, and obtains a reception time of the OFDM signal.

The seventh embodiment described above exhibits advantageous effects similar to those of the first embodiment.

(Other Embodiments)

The present invention is not limited to the above-mentioned respective embodiments. In the first embodiment, an example to obtain the symbol transmission time of the OFDM signal by using a table showing a corresponding relation between the premeasured delay time information from the reception input terminal up to the Fourier transformer input terminal and the signal level of the OFDM signal. However, the present invention is not limited to this example, and a structure may be acceptable to acquire information measured at general-purpose measurement equipment such as a network analyzer.

Although the example to provide the delayer at the front stage of the OFDM modulator is described in the second embodiment, the invention is not limited to this example, the delayer may be provided at the rear stage of the OFDM modulator.

Although the example to provide the delayer at the front stage of the up converter is described in the third embodiment, the invention is not limited to this example, the delayer may be provided at the rear stage of the up-converter or the transmission apparatus.

And having described the example to generate the reference time information by receiving the signal from the GPS satellite in each embodiment, the invention is not limited to this example, systems other than the GPS may be utilized.

Further, though the examples to measure the transmission delay time by using the input signal and output signal of the transmitting station are described in the fourth and fifth embodiments, the transmission time of either the input signal or the output signal has been known, the transmission delay time can be easily measured without being affected at a system trouble occurrence time, etc., in the transmitting station by obtaining the difference between the known transmission time and the transmission time obtained by the measurement. Moreover, also in the sixth embodiment, the fact of normal operations of the system in the case of the presence of the difference within an acceptable range can be recognized by measuring the delay time in advance and obtaining the difference between the delay time to be known and the actually measured delay time between transmitting stations. Thereby, the reliability in the measurement can be enhanced.

Furthermore, the present invention can be put into practice in a system using a broadcast wave arrived from a satellite not being limited to the terrestrial digital broadcast.

In addition, for the system configuration, the configuration of the studio and the transmitting station, the configuration of the relay station, the configuration of the transmission time measuring apparatus, the measuring method for the transmission time, the measuring method for the transmission delay time and the like, a various modifications may be made without departing from the spirit or scope of the present invention.

**Claims**

1. A time measuring apparatus for receiving a digital broadcast signal in which a reference carrier symbol signal having known amplitude/phase characteristics is repeatedly superimposed on each of a plurality of subcarriers in mutually orthogonal relations at specific frequency intervals and specific orthogonal frequency division multiplex (OFDM) symbol intervals, and also a mode and a length of a guard interval of which are known by an OFDM method to measure a reception time of the reception signal, **characterized by** comprising:

    window generation means (1117) for delaying the reception signal of one symbol to correlate the guard intervals before and after delaying with each other, generating an OFDM symbol timing signal based on its correlation result and generating a fast Fourier transformation (FFT) window signal necessary to FFT-process the reception signal based on the generated OFDM symbol timing signal;
    FFT means (1118) for FFT-processing the reception signal based on the FFT window signal;
    time information acquiring means (113) for acquiring reference time information at FFT window signal generation;
    carrier symbol extraction means (1122) for extracting the reference carrier symbol signal from an output of the FFT means;
    measuring means (112, 113) for measuring a time difference between an OFDM symbol signal with the reference carrier symbol signal extracted at the carrier symbol extraction means belonged thereto and the FFT window signal; and
    computing means (114) for computing the reception time based on the reference time information acquired at the time information acquiring means (113) and the time difference measured by the measuring means (112, 113) .

2. The time measuring apparatus according to claim 1, **characterized in that**, when the digital broadcast signal has a frame structure and a transmission mode configuration control (TMCC) signal specifying frame synchronization is added to the digital broadcast signal, the apparatus further comprises detection means (1120) for extracting the TMCC signal from the output of the FFT means to detect a frame synchronization signal, and
the computing means (114) computes the reception time based on the reference time information, the time reference and the frame synchronization signal.

3. The time measuring apparatus according to claim 1, **characterized in that** the computing means (114) further comprises:

storing means (1141) for storing a signal processing delay time information from the input terminal to the FFT means; and computes a transmission time of the digital broadcast signal by subtracting the signal processing delay time information from the reception time.

4. The time measuring apparatus according to claim 3, **characterized in that** the computing means (114) comprises:

storing means (1181) for storing a table showing a relation between the signal processing delay time information from the input terminal to the FFT means (1118) and an input signal level; and
output means (118) for reading to output corresponding signal processing delay time information based on a separately provided input signal level.

5. The time measuring apparatus according to claim 1, **characterized in that**
the carrier symbol extraction means (1122) extracts a scattered pilot signal as the reference carrier symbol signal,
the measuring means (112, 113) measures a phase of the subcarrier in which the scattered pilot signal is included and uses relative delay time information between an OFDM symbol to which the subcarrier obtained by performing a differential arithmetic operation of variations of the phase of the subcarrier in a frequency axis direction and the FFT window signal.

6. The time measuring apparatus according to claim 5, **characterized in that** the measuring means (112, 113) acquires relative delay time information of the reception signal to the FFT window signal by inverse Fourier transform (IFFT)-processing using the scattered pilot signal as a sampling point.

7. The time measuring apparatus according to claim 5, **characterized in that** the measuring means (112, 113) obtains an average value of relative delay times of the plurality of subcarriers to make the average values be the relative delay time information of the whole of the reception signal.

8. The time measuring apparatus according to claim 1, **characterized in that** the carrier symbol extraction means (1122) extracts continuous pilot signals as the reference carrier symbol signal.

9. The time measuring apparatus according to claim 1, **characterized in that** the carrier symbol extraction means (1122) extracts a signal from which a modulated component of an auxiliary channel (AC) signal is removed as the reference carrier symbol signal.

10. A transmission apparatus used as a transmitting station in a transmission system for transmitting a transmission signal from a studio to be a transmission side to a transmission path and receiving the transmission signal from the transmission path at a transmitting station to be a reception side to modulation-output at an OFDM modulator (102), **characterized by** comprising:

the time measuring apparatus (111, 112, 113, 114) according to claim 1;
a delayer (116) which is disposed at a front stage of the OFDM modulator (102) and delays an input signal to the OFDM modulator (102) by an arbitrary amount; and
delay control means (1161) for controlling the delay amount of the delayer (116) based on a measurement result from the time measuring apparatus (111, 112, 113, 114).

11. A transmission apparatus used as a transmitting station in a transmission system for transmitting a transmission signal from a studio to be a transmission side to a transmission path and receiving the transmission signal from the transmission path at a transmitting station to be a reception side to modulation-output at an OFDM modulator (102), **characterized by** comprising:

the time measuring apparatus (111, 112, 113, 114) according to claim 1;
a delayer (116) which is disposed at a rear stage of the OFDM modulator (102) and delays an output signal from the OFDM modulator (102) by an arbitrary amount; and
delay control means (1161) for controlling the delay amount at the delayer (116) based on a measurement result from the time measuring apparatus (111, 112, 113, 114).

12. A relay apparatus used as a relay station in a transmission system for modulating a transmission signal to transmit it at an OFDM modulator on a transmission side and receiving an OFDM modulated signal from the transmission path at the relay station to be a reception side to re-transmit it, **characterized by** comprising:

the time measuring apparatus (111, 112, 113, 114) according to claim 1;
a delayer (116) for delaying the OFDM modulated signal by an arbitrary amount; and
delay control means (1161) for controlling the delay amount at the delayer (116) based on a measurement result from the time measuring apparatus (111, 112, 113, 114).

13. A relay apparatus used for a transmission system for transmitting a transmission signal to a transmission path from a transmission side, receiving a transmission signal from the transmission path at a relay station to be a reception side, and modulating it at an OFDM modulator (102) to re-transmit it, **characterized by** comprising:

the time measuring apparatus (111, 112, 113, 114) according to claim 1;
a delayer (116) which is disposed at a rear stage of the OFDM modulator (102) and delays an output signal from the OFDM modulator (102) by an arbitrary amount; and
delay control means (1161) for controlling the delay amount of the delayer (116) based on a measurement result from the time measuring apparatus.

14. A delay time measuring apparatus for measuring a delay time of a signal processing system to process a digital broadcast signal by using the time measuring apparatus according to claim 1, **characterized by** comprising:

first time measuring means for directly inputting the digital broadcast signal to the time measuring apparatus (141) to measure a transmission time of its input signal;
second time measuring means for inputting the digital broadcast signal to the time measuring apparatus (141) via the signal processing system (103, 104, 105) to measure a transmission time of the input signal; and
computing means (114) for computing a delay time based on measurement results from the first and the second measuring means.

15. The delay time measuring apparatus according to claim 14, **characterized in that**
the first time measuring means uses a switch (133) to selectively guide an input signal and an output signal of the signal processing system at a prescribed switching timing to input the digital broadcast signal to the time measuring apparatus (111, 112, 113, 114) via the switch (133), and
the second time measuring means inputs the output signal from the signal processing system to the time measuring apparatus (111, 112, 113, 114) via the switch (133).

16. The delay time measuring apparatus according to claim 14, **characterized in that**
the first time measuring means directly inputs the digital broadcast signal to a signal processor of the time measuring apparatus (141), and
the second time measuring means directly inputs an output signal from the signal processing system (103, 104, 105) to the signal processor of the time measuring apparatus (141).

17. The delay time measuring apparatus according to claim 14, **characterized in that** the computing means computes a delay time based on a measurement result obtained from either the first or the second time measuring means and a separately provided measurement result.

18. A delay time measuring apparatus which uses the time measuring apparatus according to claim 1 installed in each transmitting station or relay station in a transmission system for transmitting or relaying/re-transmitting the same digital broadcast signals from a plurality of sites to measure a transmission delay time of the transmission system, **characterized by** comprising:

collecting means (174-1, 174-2) for collecting transmission time information of the digital broadcast signal measured at each transmitting station or relay station; and
computing means (164) for computing a transmission delay time based on a collection result from the collecting means (174-1, 174-2).

19. The delay time measuring apparatus according to claim 18, **characterized by** further comprising difference computing means for computing a difference between a transmission delay time obtained at the computing means (164) and a separately provided transmission delay time.

20. A time measuring apparatus for receiving a digital broadcast signal in which a reference carrier symbol signal having known amplitude/phase characteristics is repeatedly superimposed on each of a plurality of subcarriers in mutually orthogonal relations at specific frequency intervals and specific orthogonal frequency division multiplex (OFDM) symbol intervals, a mode and a length of a guard interval of which are known by an OFDM method, and a transmission mode configuration control (TMCC) signal for specifying a frame synchronism is added, to measure a reception time of the reception signal, **characterized by** comprising:

window generation means (212) for delaying the reception signal of one symbol to correlate the guard intervals before and after delaying with each other, generating an OFDM symbol timing signal based on its correlation result and generating a fast Fourier transformation (FFT) window signal necessary to FFT-process the reception signal based on the generated OFDM symbol timing signal;
FFT means (213) for FFT-processing the reception signal based on the FFT window signal;
time information acquiring means (218) for acquiring reference time information at FFT window signal generation;
detecting means (215) for detecting a frame synchronization signal from the TMCC signal by extracting the TMCC signal from the output of the FFT means (213);
measuring means (214) for measuring a time difference between the reference time information and the FFT window signal synchronized with the frame synchronization signal;
carrier symbol extraction means (216) for extracting the reference carrier symbol signal from an output of the FFT means (213);
delay profile computing means (217) for computing a delay profile from the reference carrier symbol signal extracted from the carrier symbol extracting means (216); and
correcting means (219) for obtaining the reception time by correcting the time difference measured by the measuring means (214) based on the delay profile.

FIG.1

Delay between reception input terminal and FFT input

FIG. 2

EP 1 819 078 A1

FIG. 3

| TS packet | TS packet | TS packet | TS packet | TS packet |
|-----------|-----------|-----------|-----------|-----------|

| Data section 188 bytes | IIP multiplication 8 bytes | Parity 8 bytes |
|---|---|---|

"Frame head packet flag" is superimposed on this part of the head packet of OFDM frame

FIG. 4

EP 1 819 078 A1

Studio 1

Multiplexer 2 → OFDM demodulator 26 → OFDM signal → Radio or optical transmission path 11 → Transmitter 27 → Transmission antenna 28

Transmitting station 22

FIG. 5

F I G. 6

EP 1 819 078 A1

Copy last half of symbol
and paste it

Copy last half of symbol
and paste it

(a)

Time

(b)

Time

IFFT output of jOFDM modulator. It is output for each symbol. Paste copy of end portion
of a symbol in front of symbol in guard addition circuit of next stage
OFDM signal wavelength after adding j-guard interval

FIG. 7

(a) A/D converter output

(b) 1 symbol delay circuit output

(c) Correlation computation output

F I G. 8

EP 1 819 078 A1

FIG. 9

(Note) tm : Delay time of multi-pass with respect to main wave

FIG. 10

EP 1 819 078 A1

FIG. 11

F I G. 12

EP 1 819 078 A1

Delay tf by receiver tuner

to

Ts — Transmission signal symbol head

Tg

Tu

Transmission signal

Received FFT input

Received symbol head timing

tr

tw

FFT window head timing

FFT window

Relative time difference td1 between FFT window heading portion and received symbol heading portion

(Note) to : Transmission time of symbol heading position
tr : Reception time of symbol heading position
tw : Time at FFT window heading position

EP 1 819 078 A1

F I G. 13

(a) Symbol heading position of reception signal

(b) Heading position of FFT window

(Note) As shown in the figure, the phases of all the sub-carriers are 0 at the head of the symbol

F I G. 14

FIG. 15

```
121                    122                              124              125
FFT    (1)    r, φ conversion    (2)    Phase         (4)    Delay time   (5)
                                        difference            computing
                                        computing
                            (3)
                    1 carrier delay
                    123
```

F I G. 16

EP 1 819 078 A1

FIG.17

(Note) FFT window signal and frame synchronism signal

FIG. 18

EP 1 819 078 A1

FIG. 19

(Note) FFI window signal and frame synchronism signal

F I G. 20

EP 1 819 078 A1

(Note) FFI window signal and frame synchronism signal

FIG. 21

EP 1 819 078 A1

FIG. 22

EP 1 819 078 A1

EP 1 819 078 A1

FIG. 23

**EP 1 819 078 A1**

# INTERNATIONAL SEARCH REPORT

| | International application No. |
|---|---|
| | PCT/JP2005/018194 |

**A. CLASSIFICATION OF SUBJECT MATTER**
*H04J11/00* (2006.01)

According to International Patent Classification (IPC) or to both national classification and IPC

**B. FIELDS SEARCHED**

Minimum documentation searched (classification system followed by classification symbols)
*H04J11/00* (2006.01)

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,A | JP 2004-320348 A (Toshiba Corp.), 11 November, 2004 (11.11.04), Full text; all drawings & EP 1469646 A2 | 1-20 |
| A | JP 2004-104237 A (Toshiba Corp.), 02 April, 2004 (02.04.04), Full text; all drawings (Family: none) | 1-20 |
| A | JP 2004-104236 A (Toshiba Corp.), 02 April, 2004 (02.04.04), Full text; all drawings (Family: none) | 1-20 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 December, 2005 (15.12.05) | 27 December, 2005 (27.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/018194 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2004-104235 A (Toshiba Corp.), 02 April, 2004 (02.04.04), Full text; all drawings (Family: none) | 1-20 |
| A | JP 2000-059325 A (Advanced Digital Television Broadcasting Laboratory), 25 February, 2000 (25.02.00), Full text; all drawings (Family: none) | 1-20 |
| A | JP 11-346196 A (Advanced Digital Television Broadcasting Laboratory), 14 December, 1999 (14.12.99), Full text; all drawings (Family: none) | 1-20 |
| A | JP 2001-189657 A (Toshiba Corp.), 10 July, 2001 (10.07.01), Full text; all drawings (Family: none) | 1-20 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11373532 A